# EUROPEAN PATENT SPECIFICATION

(11) **EP 4 393 738 B1**
(45) Date of publication and mention of the grant of the patent: **09.07.2025**
(21) Application number: 23219573.5
(22) Date of filing: 22.12.2023
(51) Int. Cl.: B60K 5/00, B60K 5/04

(54) **OFF-ROAD VEHICLE**
GELÄNDEFAHRZEUG
VÉHICULE TOUT-TERRAIN

(30) Priority: 30.12.2022 CN 202211742546; 01.08.2023 CN 202310959799
(43) Date of publication of application: 03.07.2024
(73) Proprietor: Zhejiang CFMOTO Power Co., Ltd., Hangzhou, Zhejiang (CN)
(72) Inventor: FANG, Ying, Hangzhou, Zhejiang Province (CN); SHU, Guiming, Hangzhou, Zhejiang Province (CN)
(74) Representative: Sun, Yiming

(56) References cited:
- WO-A1-2020/147417
- WO-A1-2022/168001
- CN-A- 112 441 169
- JP-U- S61 117 786
- US-A1- 2021 394 856
- US-A1- 2022 089 243

## Description

### TECHNICAL FIELD

The invention relates to the field of vehicles, and in particular to an off-road vehicle.

### BACKGROUND

At present, off-road vehicles are increasingly popular among consumers, and the engines used in these vehicles are generally single cylinder engines. The existing engine cylinder head for off-road vehicles is mostly arranged adjacent to the front. This requires the exhaust pipe and tubular muffler to go through the entire vehicle, resulting in higher temperatures near the driver's body, especially the legs when riding on the vehicle, thereby reducing the driver driving experience. At the same time, adjusting the position of the engine can easily lead to difficulties in seat arrangement and center of gravity deviation. Therefore, it is difficult to balance compactness and user comfort in the configuration of the engine and other components of off-road vehicles.

Document WO 2022168001A1 discloses an all-terrain vehicle (ATV) which includes a frame having front and rear ends, an internal combustion engine connected to the frame, the engine including a front portion and a rear portion, a single cylinder defining a cylinder axis, an air intake port defined in the front portion facing towards the front end of the frame, and an exhaust port defined in the rear portion facing towards the rear end of the frame. The ATV further has an exhaust assembly fluidly connected to the exhaust port.

### SUMMARY OF THE INVENTION

To overcome the deficiencies of the related art, the present invention provides an off-road vehicle, as defined in the independent claim attached. Preferred embodiments of the invention are defined in dependent claims attached. The off-road vehicle has a compact structure and better comfort riding comfort.

The cylinder head midpoint in the vehicle front-rear direction relative to the front rotation axis of the front wheel and the rear rotation axis of the rear wheel is adjusted, so that the engine heat source is away from the user on the seat, and the center of gravity of the entire vehicle is reasonable and the sitting height is appropriate, thereby making the whole vehicle compact.

Button assembly with corresponding control logic is used to select the locking state of the differential mechanism, improve the safety of vehicle driving, and enhance the driving experience by reducing the difficulty of user operation.

### BRIEF DESCRIPTION OF THE DRAWINGS

FIG. 1 is a perspective view of an off-road vehicle according to an embodiment of the invention;
FIG. 2a shows the layout between various components of the off-road vehicle according to a preferred embodiment of the invention;
FIG. 2b shows the layout between the prime mover assembly and transmission system of the off-road vehicle in FIG. 1;
FIG. 3 shows the layout between various components of the off-road vehicle in FIG. 1;
FIG. 4 is a top plan view of the partial structure of the off-road vehicle in FIG. 1;
FIG. 5 shows the layout of the prime mover assembly in FIG. 1;
FIG. 6 shows the layout of the transmission system and the prime mover assembly in FIG. 1;
FIG. 7 is another off-road vehicle according to another preferred embodiment of the invention;
FIG. 8 shows the layout of the transmission system and the prime mover assembly provided in a preferred embodiment of the invention;
FIG. 9a is a top plan view of single row of seat vehicle with foot pedals;
FIG. 9b is a top plan view of two rows of seat vehicle with foot pedals;
FIG. 10 shows the layout of the prime mover assembly provided in a preferred embodiment of the invention;
FIG. 11 shows the connection between the gearbox and the power output shaft; and
FIG. 12 shows the layout of the prime mover assembly provided in a preferred embodiment of the invention.

The drawings herein are incorporated into the specification and form a portion of this specification, illustrating embodiments in accordance with the invention and used together with the specification to explain the principles of the invention.

### DETAILED DESCRIPTION

For better understanding of the above objects, features and advantages of the present invention, the embodiments of the present invention will be described in detail below with reference to the accompanying drawings.

The terms used in the embodiments of this invention are for the purpose of describing specific embodiments only, and are not intended to limit this invention. The singular forms of "one", "said", and "the" used herein are also intended to include the plural forms unless the context clearly indicates other meanings.

It should be noted that the term "and/or" used herein is only a description of the association relationship between related objects, indicating that there can be three types of relationships, such as A and/or B, which can indicate the existence of A alone, the coexistence of A and B, and the existence of B alone. In addition, the character "/" herein generally indicates that the associated objects are an "or" relationship.

The general orientations of front, rear, up (upper), down (lower), left and right for the off-road vehicle 100 are defined in drawings. Furthermore, in the context, it should be noted that when a component is mentioned to be connected "above" or "below" another component, it can not only be directly connected "above" or "below" another component, but can also be indirectly connected "above" or "below" another component through intermediate components.

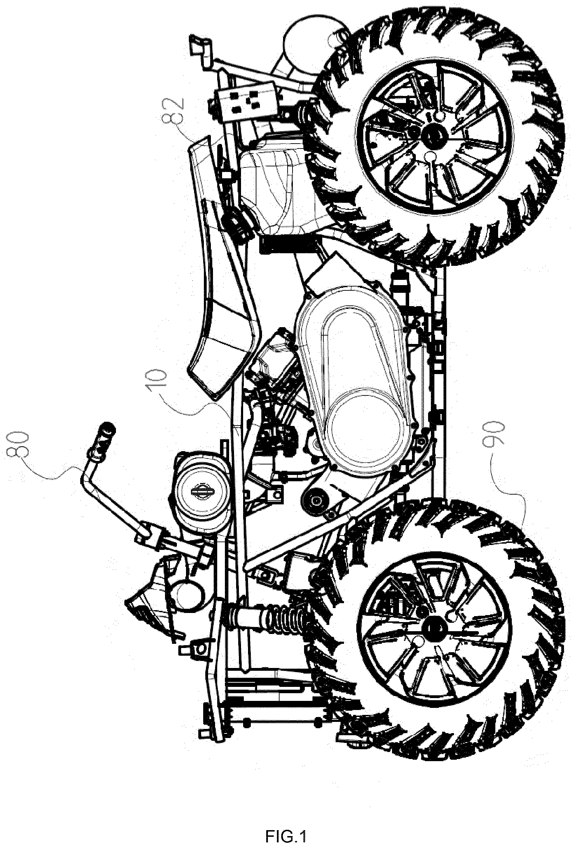

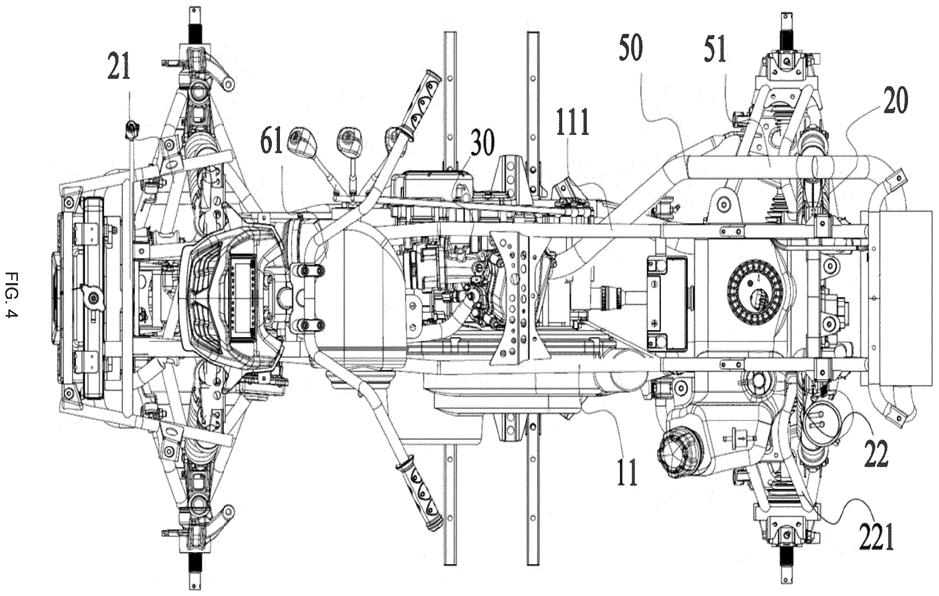

As shown in FIGS. 1 to 4, the off-road vehicle 100 includes a frame 10, a vehicle cover, a suspension assembly 20, a prime mover assembly 30, a transmission system 40, and a plurality of wheels 90. The vehicle cover at least covers the frame 10. The plurality of wheels 90 are connected to the frame 10 and includes at least one front wheel and at least one rear wheel. The number of wheels may be three or more. The suspension assembly 20 includes a front suspension 21 and a rear suspension 22. The front wheels 121 are connected to the frame 10 by the front suspension 21, and the rear wheels 122 are connected to the frame 10 by the rear suspension 22. The transmission system 40 is mounted on the frame 10 to transmit the power of the prime mover assembly 30 to the wheels 90.

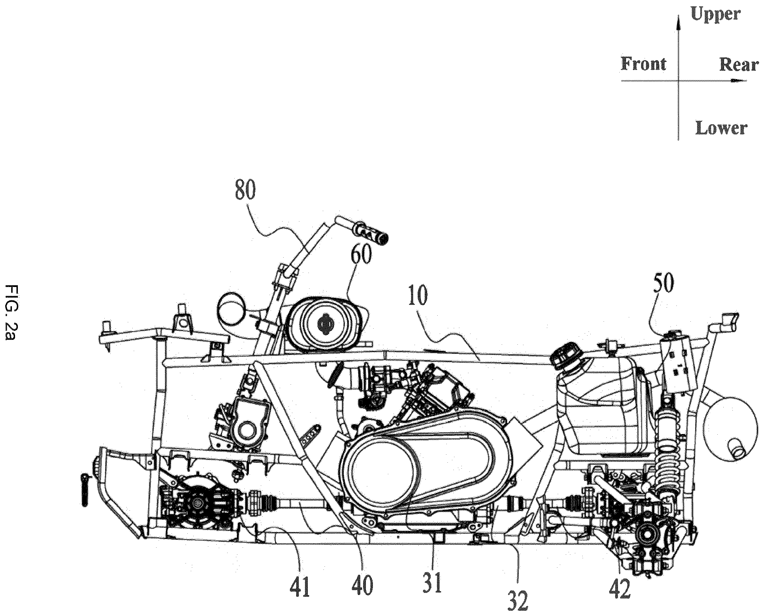

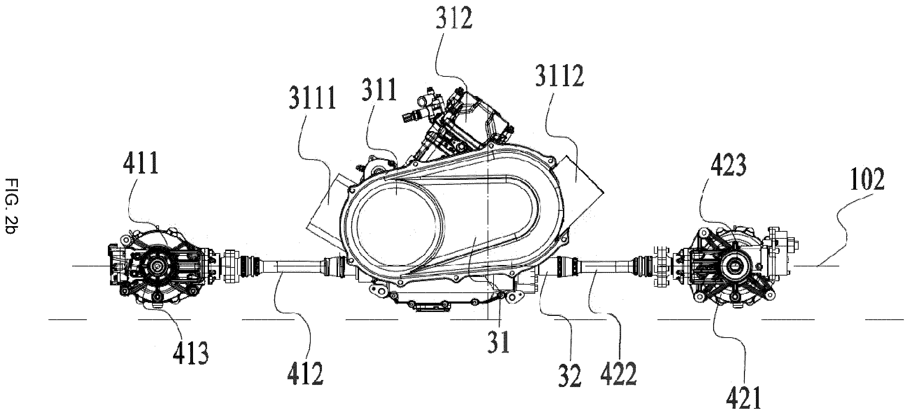

As shown in FIGS. 2a and 2b, the prime mover assembly 30 includes an engine 31 and a power output shaft 32. The engine 31 is at least partially arranged on the frame 10 and includes an engine body 311 and a cylinder head 312 connected to the engine body 311, the engine 31 is connected to the power output shaft 32. The cylinder head 312 faces towards the rear of the frame 10. An engine air inlet 3111 and an engine air outlet 3112 are respectively defined on either end of the engine body. The transmission system 40 includes a front transmission assembly 41 and a rear transmission assembly 42. The transmission system 40 is mounted on the frame 10 to transmit the power of the engine 31 to the wheels 90.

The front transmission assembly 41 includes a front clutch 411 and a front output shaft 412. The rear transmission assembly 42 includes a rear clutch 421 and a rear output shaft 422. Both the front output shaft 412 and the rear output shaft 422 are connected to the power output shaft 32. The front clutch 411 is connected to the front wheel and rotates around the front rotation shaft 413. The front clutch 411 is connected to the front wheel by a connection shaft, thereby driving the front wheel to rotate. The rear clutch 421 is connected to the rear wheel and rotates around the rear rotation shaft 423. The rear clutch 421 is connected to the rear wheel by a connection shaft, thereby driving the rear wheel to rotate. Optionally, the off-road vehicle may be two-wheel drive or four-wheel drive.

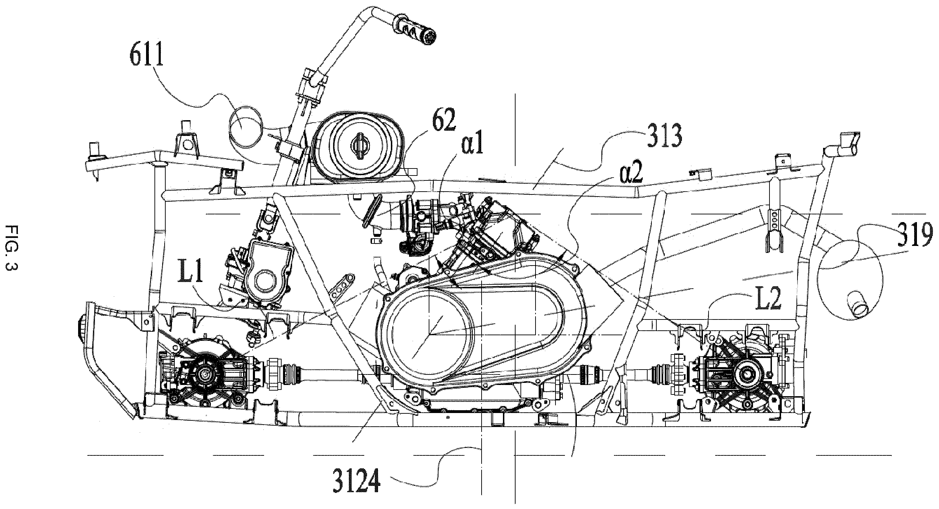

As shown in FIG. 3, the off-road vehicle 100 further includes a steering assembly 80 mounted on the frame 10 to control the steering of the vehicle 100. The steering of the front wheel is implemented by the steering assembly 80. A longitudinal mid-plane, 101 is defined as a plane perpendicular to a width direction of the vehicle and where a center line of the vehicle in a width direction is located. The off-road vehicle 100 further includes an exhaust assembly 50 and an intake assembly 60. The exhaust assembly 50 is connected to the engine 31 for exhausting the exhaust gas generated by the engine 31. The exhaust assembly 50 includes an exhaust pipe 51. A gearbox 314 is arranged at one side of the longitudinal mid-plane, and the exhaust pipe 51 is arranged at the other side of the longitudinal mid-plane 101. The longitudinal mid-plane 101 is perpendicular to the ground surface, and the center line of the vehicle in a width direction is located on the longitudinal mid-plane 101.

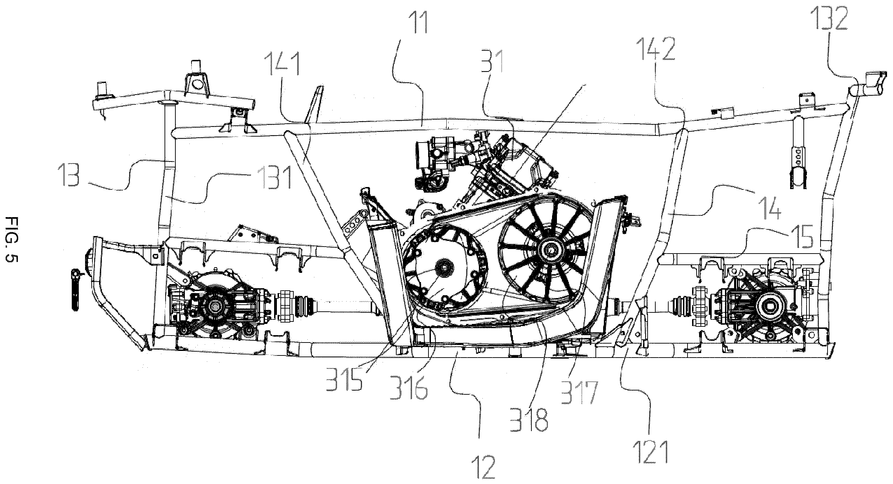

Please referring to FIG. 5, the frame 10 includes two upper main beam tubes 11 arranged substantially symmetrically relative to the longitudinal mid-plane 101, two lower main beam tubes 12 arranged substantially symmetrically relative to the longitudinal mid-plane 101, and a plurality of reinforcing tubes 14 connecting the upper main beam tubes 11 and the lower main beam tubes 12. The engine 31 is arranged between the upper main beam tubes 11 and the lower main beam tubes 12. A vehicle longitudinal mid-plane projection is defined as a projection of the off-road vehicle 100 projected on the longitudinal mid-plane 101 in the width direction, within the vehicle longitudinal mid-plane projection, a projection of the air filter 61 is above the projections of the upper main beam tubes 11. The intake assembly 60 further includes an air inlet 3111. Within the vehicle longitudinal mid-plane projection, a projection of the air inlet 3111 is above the projections of the upper main beam tubes 11. The upper main beam tubes 11 and the lower main beam tubes 12 form the skeleton of the frame 10, and the engine 31 is arranged within an area enclosed by the upper main beam tubes 11 and the lower main beam tubes 12. The frame 10 further includes a plurality of longitudinal tubes 13 and a plurality of reinforcing tubes 14, the plurality of longitudinal tubes 13 are connected between the upper main beam tubes 11 and the lower main beam tubes 12. The plurality of longitudinal tubes 13 include a first longitudinal tube 131 arranged in front of a steering assembly 80 and a second longitudinal tube 132 arranged at the rear of the frame 10. The first longitudinal tube 131 and the second longitudinal tube 132 extend substantially in the vehicle height direction. The reinforcing tubes 14 includes a first reinforcing tube 141 and a second reinforcing tube 142, the first reinforcing tube 141 is arranged in front of the second reinforcing tube 142. Both the first reinforcing tube 141 and the second reinforcing tube 142 are connected to the upper main beam tubes 11 and the lower main beam tubes 12. Within the vehicle longitudinal mid-plane projection, a projection of the engine 31 is substantially located within an area enclosed by a projection of the first reinforcing tube 141, a projection of the second reinforcing tube 142, projections of the upper main beam tubes 11, and projections of the lower main beam tubes 12, so as to facilitate the maintenance of engine 31, allowing the engine 31 to be directly removed from one side of the frame 10 without excessive disassembly of frame 10.

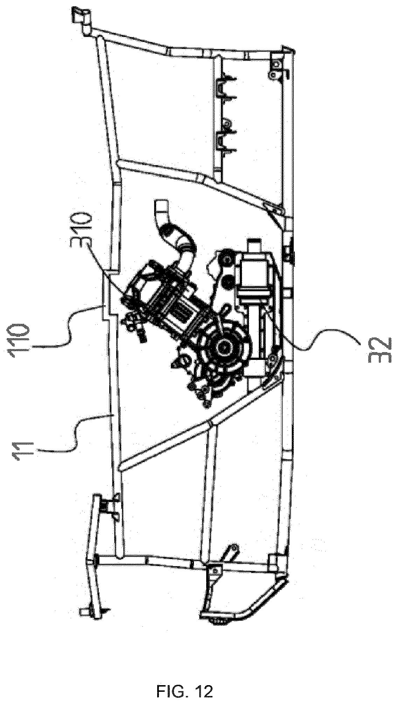

Optionally, referring to FIG. 12, the upper main beam tubes 11 define an upward arched avoidance portion 110 to match the assembly of engine 31, allowing the engine 31 to be directly removed from one side of the frame 10.

A straight line 1032 is defined as a straight line parallel to the ground surface and where the cylinder head midpoint is located, and the exhaust assembly intersects with the straight line 1032. The exhaust assembly 50 includes an air outlet 51 located directly behind the frame 10 and between the straight line 1032 and the lower main beam tubes 12, which prevents overheated air outlet from affecting the wheels and ensure the exhaust performance of exhaust assembly 50.

The frame 10 further includes a suspension connection tube 15 for connecting the longitudinal tubes 13 and the reinforcement tubes 14. The suspension connection tube 15 is connected to the rear suspension 22 and supports the fuel tank 82. Within the vehicle longitudinal mid-plane projection, a projection of the engine 82 is substantially located within an area enclosed by a projection of the first reinforcing tube 14, a projection of the second reinforcing tube 13, projections of the upper main beam tubes 11, and projections of the suspension connection tube 15. The fuel tank 82 is located above the rear suspension 22. Both the rear suspension 22 and the fuel tank 82 are connected by the suspension connection tube 15, thereby resulting in a compact layout of the frame 10.

The intake assembly 60 includes an air filter 61 and an intake pipe 62 connected to the air filter 61 and the engine 31. A vehicle longitudinal mid-plane projection is defined as a projection of the off-road vehicle 100 projected on the longitudinal mid-plane 101 in the width direction, within the vehicle longitudinal mid-plane projection, a projection of the air filter 61 is above the projections of the upper main beam tubes 11.

The rear suspension includes an upper rocker arm 221, a lower rocker arm, and a shock absorber 222. The shock absorber is more outward than the upper rocker arm and more inward than the lower rocker arm in the vehicle width direction. Within the vehicle longitudinal mid-plane 101 projection, the projection of the fuel tank 82 and the projection of the shock absorber 222 at least partially overlaps.

The air intake assembly 60 is used to intake air to the engine 31. The intake assembly 60 includes an air filter 61 and an intake pipe 62 connected to the air filter 61 and the engine 31. The air filter 61 includes an installation interface 611 that faces towards the outer of the off-road vehicle and is exposed outside the vehicle cover. Therefore, the air filter 61 can be open through the installation interface 611 to replace the filter element. When the filter element needs to be replaced, users do not need to remove the air filter 61 or the vehicle cover. They can directly remove and replace the filter element through the installation interface 611.

The front transmission assembly 41 includes a front clutch 411 and a front output shaft 412. The rear transmission assembly 42 includes a rear clutch 421 and a rear output shaft 422. Both the front output shaft 412 and the rear output shaft 422 are connected to the power output shaft 32. The front clutch 411 is connected to the front wheel and rotates around the front rotation shaft 413. The rear clutch 421 is connected to the rear wheel and rotates around the rear rotation shaft 423. A straight line, L1 is defined as a straight line connecting a projection point of the cylinder head 312 mid-point projected on the longitudinal mid-plane 101 of the vehicle in the width direction and a projection point of an axis of the front rotation shaft 413 projected on the longitudinal mid-plane 101 of the vehicle in the width direction. A straight line, L2 is defined as a straight line connecting a projection point of the cylinder head 312 mid-point projected on the longitudinal mid-plane 101 of the vehicle in the width direction and a projection point of an axis of the rear rotation shaft 423 projected on the longitudinal mid-plane 101 of the vehicle in the width direction. A ratio of the length of L1 and the length of L2 is in the range from 0.4 to 1.8, which adjusts the center of gravity of the vehicle in the front-rear direction, thereby improving the stability of the vehicle. The overall height of the engine 31 is reduced, which is easy to assemble the engine 31 into the frame 10, and ensuring that the seat cushion has better driving comfort without increasing the overall height of the vehicle. Preferably, the ratio of the length of L1 and the length of L2 is in the range from 0.4 to 1.5.

The cylinder head includes a piston, and the cylinder head 312 includes an upper cover body 3122. The cylinder head includes a cylinder axis 313, and the cylinder axis 313 is the central axis of the piston. The cylinder head mid-point 312 is the point where the cylinder axis 313 and the upper cover body 3122 intersects.

Please referring to FIG. 12, the cylinder head 312 extends along a cylinder axis where the cylinder head mid-point is located. An angle, α1 is defined between a projection line of the cylinder axis 313 projected on the longitudinal mid-plane 101 in the width direction and the straight line, L1. An angle, α2 is defined between a projection line of the cylinder axis 313 projected on the longitudinal mid-plane 101 in the width direction and the straight line, L2. A ratio of α1 to α2 is in the range from 0.15 to 0.4. The engine includes a gearbox 314 arranged inside the engine body 311. The gearbox 314 includes a main pulley 316 with first rotation axis 315 and a secondary pulley 318 with a second rotation axis 317. Within the vehicle longitudinal mid-plane 101 projection, a straight line connecting the first rotation axis 315 and the second rotation axis 317 is defined as a straight line, 319. The engine 31 further includes a tensioner 310 and a shift connection member. Within the vehicle longitudinal mid-plane 101 projection, a projection of the tensioner 310 and a a projection of the shift connection member is located between the projection line of the straight line 319 and the projection line of the cylinder axis 313. This arrangement of engine 31 allows cylinder head 312 to be far away from the tensioner 310 and the shift connection member. The material of the shift connection member is generally rubber, which can avoid damage to the tensioner 310 and shift connection member due to overheating of cylinder head 312 at high a temperature.

Preferably, the ratio of α1 to α2 is in the range from 0.22 to 0.34.

Within the vehicle longitudinal mid-plane 101 projection, a straight line connecting the projection point of the front rotation shaft 413 and the projection point of the rear rotation shaft 423 is defined as an output straight line 102. A point, M is defined as a point where a straight line perpendicular to the ground surface where the projection point of the cylinder head 312 mid-point is located intersects with the power output straight line 102. A distance from the point M to a front rotation axis 413 is defined as a first distance L4. A distance from the point M to a rear rotation axis is defined as a second distance L5. A ratio of the first distance L4 to the second distance L5 is in the range from 0.9 to 1.5.

A vertical distance from the projection point of the cylinder head 312 midpoint to the power output line 102 is defined as a third distance L3. A ratio of the third distance L3 to the second distance L4 is in the range from 0.4 to 0.78, which can ensure the layout space of the seats, prevent the heat from cylinder head 312 from affecting the seats, and make the layout of the entire vehicle compact and the center of gravity position reasonable.

Optionally, the off-road vehicle includes one row of seats for the driver and the passenger. A straight line, L1 is defined as a straight line connecting a projection point of the cylinder head 312 mid-point projected on the longitudinal mid-plane 101 of the vehicle in the width direction and a projection point of an axis of the front rotation shaft 413 projected on the longitudinal mid-plane 101 of the vehicle in the width direction. A straight line, L2 is defined as a straight line connecting a projection point of the cylinder head 312 mid-point projected on the longitudinal mid-plane 101 of the vehicle in the width direction and a projection point of an axis of the rear rotation shaft 423 projected on the longitudinal mid-plane 101 of the vehicle in the width direction. A ratio of the length of L1 and the length of L2 is in the range from 1 to 1.5. Preferably, the ratio of the angle L1 to the angle L2 is in the range from 1.2 to 1.3. A vertical distance from the projection point of the cylinder head 312 midpoint to the power output line 102 is defined as a third distance. A ratio of the third distance to the second distance is in the range from 0.52 to 0.78.

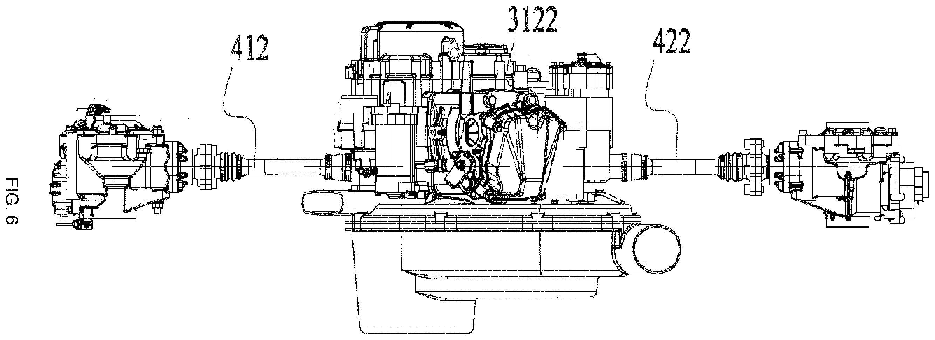

Optionally, referring to FIG. 6, the power output shaft 32, the front output shaft 412, and the rear output shaft 422 are located on the same plane, which eliminates the need for a universal joint to connect the front output shaft 412 and rear output shaft 422, thereby improving transmission efficiency. Optionally, the power output shaft 32, the front output shaft 412, and the rear output shaft 422 are all located on the longitudinal center plane 101, so that the vehicle is substantially symmetric relative to the longitudinal center plane 101, which can save mold costs and improve the stability of the off-road vehicle. Optionally, the power output shaft 32, the front output shaft 412, and the rear output shaft 422 are all located on the longitudinal center plane 101, and are coaxially arranged.

The distance from the axis of the power output shaft 32 to the ground surface gradually increases from front to rear along the length direction of the vehicle. An angle defined between the axis of the power output shaft and a ground surface is in the range from 0 degree to 15 degrees, which prevents the engine 31 from being too low to exceed the lowest setting plane, prevents the engine 31 from interfering with obstacles on the ground surface, and also prevents the engine 31 from being too high to interfere with the arrangement of the seats.

Within the vehicle longitudinal mid-plane 101 projection, a first vertical line 3123 is defined as a straight line perpendicular to the ground surface and where the projection point of the cylinder head mid-point is located. A distance in the vehicle length direction from the projection point of the first vertical line 3123 to the first rotation axis 315 is defined as a first length L6. A distance in the vehicle length direction from the projection point of the first vertical line 3123 to the second rotation axis 317 is defined as a second length L7. A ratio of the first length L6 to the second length L7 is in the range from 4 to 6, which prevents overheating of the cylinder head 312 and damage to the tensioner and the shift connection member while also preventing the engine 31 from being too high and interfering with the layout of other components such as the seats.

Within the vehicle longitudinal plane mid-projection, a second vertical line 3124 is defined as a straight line perpendicular to the ground surface and where the midpoint of a straight line connecting the first rotation axis 315 and the second rotation axis 317 in the front- rear direction is located. The second vertical line 3124 is located in front of the first vertical line 3123.

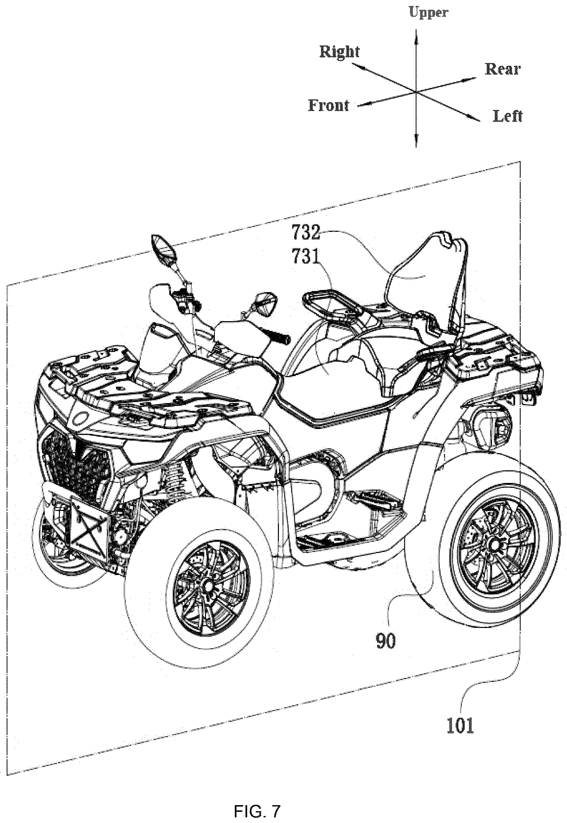

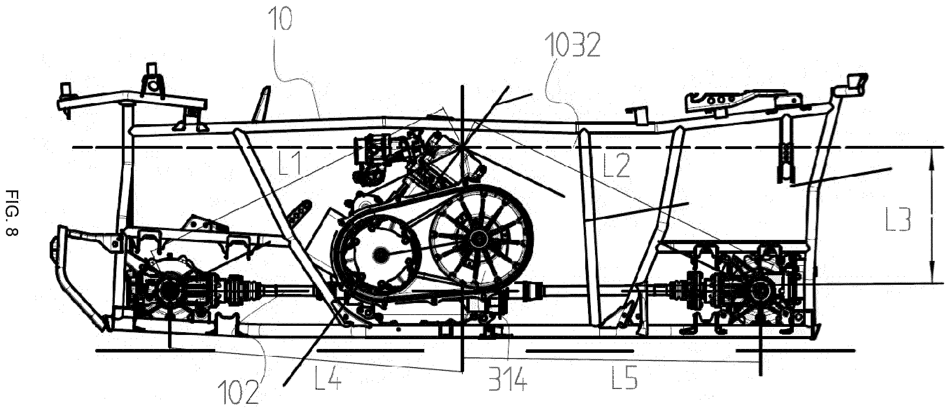

Optionally, referring to FIGS. 7 and 8, the off-road vehicle includes two rows (731 and 732) of seats for the driver and the passengers. A straight line, L1 is defined as a straight line connecting a projection point of the cylinder head 312 mid-point projected on the longitudinal mid-plane 101 of the vehicle in the width direction and a projection point of an axis of the front rotation shaft 413 projected on the longitudinal mid-plane 101 of the vehicle in the width direction. A straight line, L2 is defined as a straight line connecting a projection point of the cylinder head 312 mid-point projected on the longitudinal mid-plane 101 of the vehicle in the width direction and a projection point of an axis of the rear rotation shaft 423 projected on the longitudinal mid-plane 101 of the vehicle in the width direction. A ratio of the length of L1 and the length of L2 is in the range from 0.4 to 0.6. A ratio of the third distance to the second distance is in the range from 0.4 to 0.5. The position of engine 31 is adjusted relative to the front and rear wheels, and the center of gravity of the vehicle in the front-rear direction is adjusted, thereby improving the stability of the vehicle.

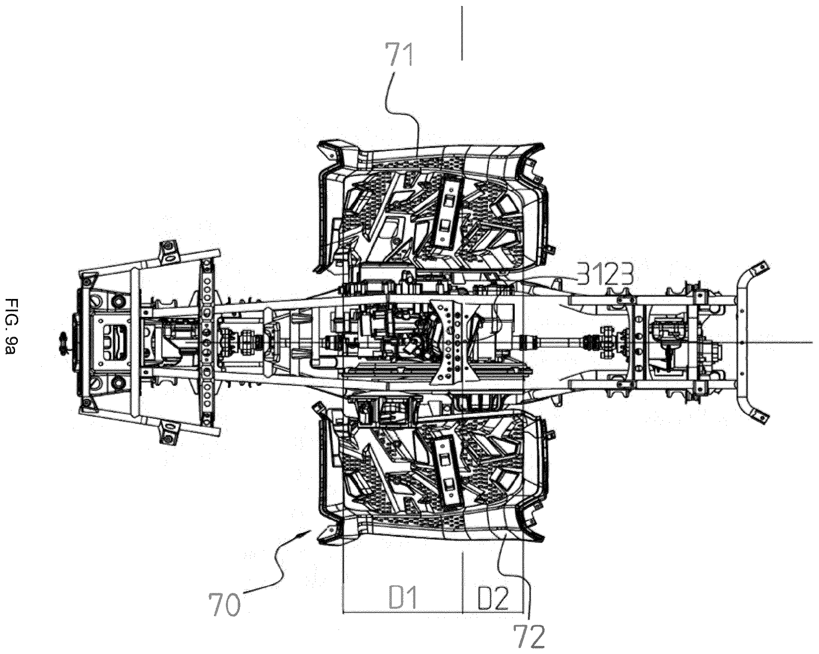

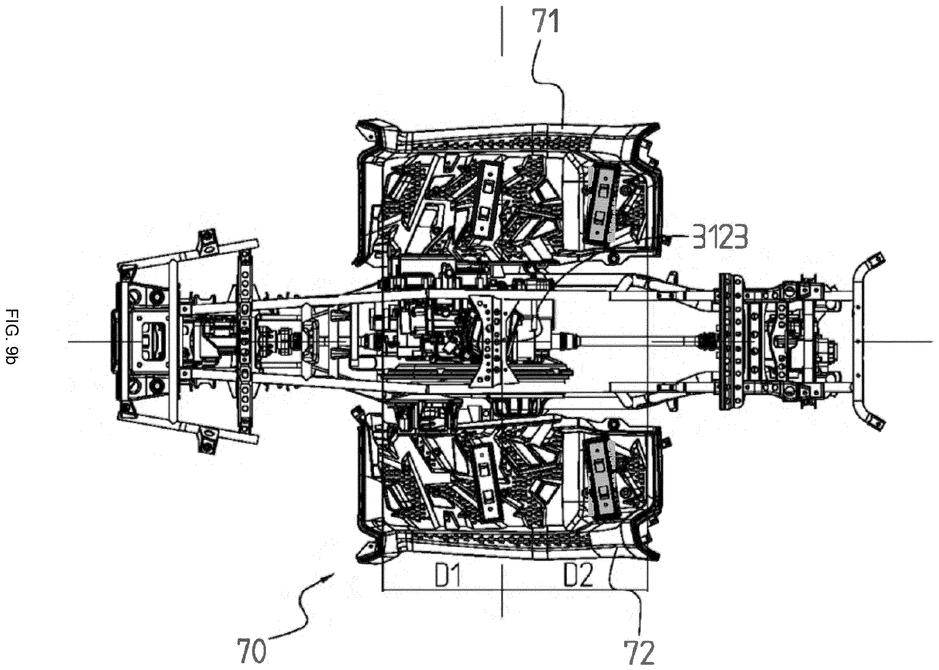

As shown in FIGS. 9a and 9b, the off-road vehicle further includes a first foot pedal 71 and a second foot pedal 72 arranged at either side of the longitudinal mid-plane 101, respectively. Within the vehicle longitudinal mid-plane 101 projection, a first vertical line is defined as a straight line perpendicular to the ground surface and where the projection point of the cylinder head 312 mid-point is located, wherein the first vertical line intersects with a projection of the first foot pedal 71 projected on the longitudinal mid-plane.

In some embodiments, the first foot pedal 71 and the second foot pedal 72 are symmetric with respective to the longitudinal mid-plane 101. A first vertical line 3123 is defined as a straight line perpendicular to the ground surface and where the projection point of the cylinder head mid-point is located. A distance in the vehicle length direction from the front edge of the foot pedal (71 or 72) to the first vertical line 3123 is defined as a distance D1. A distance in the vehicle length direction from the rear edge of the foot pedal (71 or 72) to the first vertical line 3123 is defined as a distance D2. A ratio of the distance D1 to the distance D2 is in the range from 0.6 to 1.0. Thus, the space above the foot pedals 70 can be used to disassemble the entire engine along the vehicle width direction, thereby making it easier to repair the engine.

A distance in the vehicle length direction from the front edge of the foot pedal (71 or 72) to the first vertical line 3123 is defined as a distance D1. A distance in the vehicle length direction from the rear edge of the foot pedal (71 or 72) to the first vertical line 3123 is defined as a distance D2. A ratio of the distance D1 to the distance D2 is in the range from 0.8 to 0.9.

In some embodiments, in the front-direction of the off-road vehicle 100, the engine 31 is at least partially arranged between the front wheel 91 and the rear wheel 92, and the power output shaft 32 is at least partially arranged between the front wheel 91 and the rear wheel 92. In the upper-lower direction of the off-road vehicle 100, the engine 31 is at least partially above the power output shaft 32. The power of the engine 31 from the power output shaft 32 is transmitted through the transmission system 40 to the wheels 90, so as to allow the prime mover assembly to drive the wheels 90 to control the off-road vehicle 100. In the front-rear direction of the off-road vehicle 100, the transmission system 40 is at least partially in front of/behind the power output shaft 32, which allows the transmission system 40 to transmit the power of the engine 31 from the power output shaft 32 to the front wheels 91 and/or rear wheels 92.

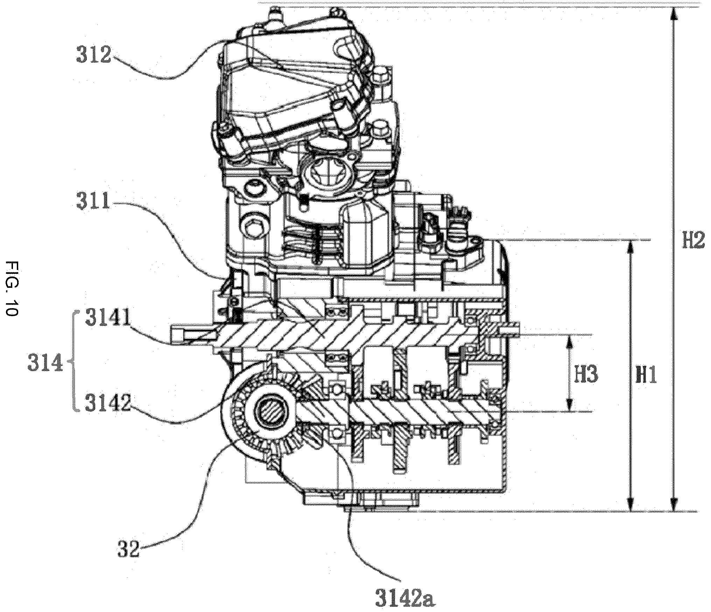

In some embodiments, as shown in FIG. 10, the engine includes an engine body and a gearbox 314 arranged inside the engine body 311. In the front-direction of the off-road vehicle 100, the gearbox 314 is at least partially arranged between the front wheel 91 and the rear wheel 92, and the gearbox 314 is adjacent to the power output shaft 32. The gearbox 314 is used to control the gear ratio between the engine 31 and the wheels 90, thereby facilitating the optimal performance of the engine 31 and improving the sporty performance of the off-road 100.

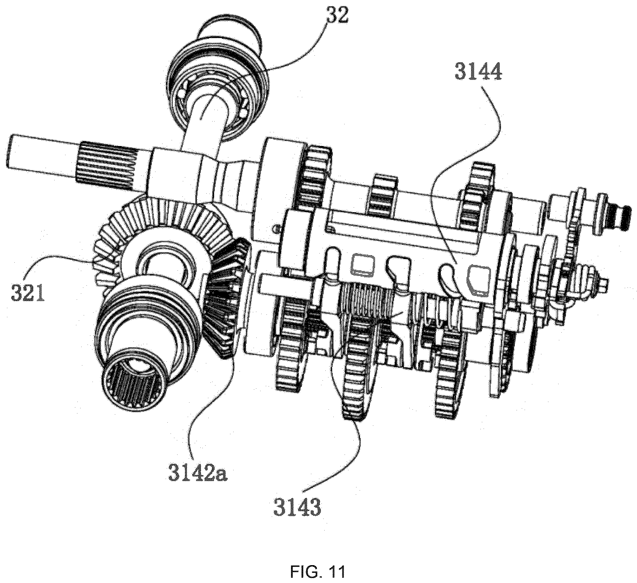

In some embodiments, as shown in FIGS. 10 and 11, the gearbox 314 includes a main output shaft 3141 and a secondary output shaft 3142 connected to each other by gears to control the gear switching of the off-road vehicle 100. The secondary output shaft 3142 is fitted with an output bevel gear 3142a connected to the power output shaft 32 in a transmission mode. An axis of the secondary output shaft 3142 is substantially parallel to an axis of the main output shaft 3141 and is substantially perpendicular to the axis of the power output shaft 32. In the upper-lower direction of the off-road vehicle 100, the main output shaft 3141 is at least partially above the secondary output shaft 3142. The main output shaft 3141 is at least partially above the power output shaft 32. In the left-right vehicle direction, the output bevel gear 3142a is arranged on the left side of the output secondary shaft 3142. The power output shaft 32 is at least partially located on the left side of the output bevel gear 3142a. Thus, the secondary output shaft 3142 and power output shaft 32 are connected through the output bevel gear 3142a in a transmission mode. In these embodiments, the transmission mode of the main output shaft 3141 and the secondary output shaft 3142, as well as the transmission mode of the secondary output shaft 3142 and the power output shaft 32 are both by gear meshing. The power of engine 31 can be transmitted by the main output shaft 3141 to the secondary output shaft 3142, and then to the power output shaft 32 by the output secondary shaft 3142, which makes the transmission of the power transmission more stable, thereby improving the efficiency of power transmission. The transmission reliability and structural stability of gearbox 314 can be improved, thereby improving the working stability of prime mover assembly 30. In addition, the gearbox 314 arranged inside the engine 31 can achieve dual shaft transmission by the main output shaft 3141 and the secondary output shaft 3142, thereby reducing the space occupied by the gearbox 314, making the structure more compact, and improving the space utilization rate of the off-road vehicle 100.

In some embodiments, a ratio of a height of the gearbox 314 in a vehicle 100 height direction to a height of the engine 31 in the vehicle 100 height direction is in the range from 0.2 to 0.5. Preferably, a ratio of a height H1 of the gearbox 314 in a vehicle height direction to a height H2 of the engine 31 in the vehicle height direction is in the range from 0.26 to 0.41. More preferably, a ratio of a height H1 of the gearbox 314 in a vehicle 100 height direction to a height H2 of the engine 31 in the vehicle height direction is in the range from 0.30 to 0.37. In another embodiment, a ratio of a height H1 of the gearbox 314 in a vehicle height direction to a height H2 of the engine 31 in the vehicle height direction is 0.34. This can avoid the gearbox 314 occupying too much space in engine 31, thereby improving the space utilization rate of off-road vehicle 100, and can also avoid reducing the transmission efficiency of gearbox 314 due to the small ratio of H1 to H2, thereby improving the efficiency of engine 31.

In some embodiments, a height H3 is defined as a distance in the vehicle height direction from the main output shaft 3141 to the secondary output shaft 3142, and a ratio of the height H3 to the height H2 is in the range from 0.1 to 0.2. Preferably, the ratio of the height H3 to the height H2 is in the range from 0.12 to 0.19. More preferably, the ratio of the height H3 to the height H2 is in the range from 0.13 to 0.17. In another embodiment, the ratio of the height H3 to the height H2 is 0.15. This can avoid the gearbox 314 occupying too much space in engine 31, thereby improving the space utilization rate of off-road vehicle 100, and can also avoid reducing the transmission efficiency of gearbox 314 due to the small ratio of H3 to H2, thereby improving the efficiency of engine 31.

In some embodiments, when viewed from the vehicle left-right direction, the secondary output shaft 3142 and the power output shaft 32 at least partially overlap. The secondary output shaft 3142 extends substantially in the vehicle 100 left-right direction. The power output shaft basically extends substantially in the vehicle 100 front-rear direction. The axis of secondary output shaft 3142 and the axis of the power output shaft are in the same plane perpendicular to the vehicle 100 upper-lower direction. That is to say, the axis of the secondary output shaft 3142 is substantially perpendicular to the axis of the power output shaft 32. This makes the structure between the secondary output shaft 3142 and the power output shaft more compact, which is conducive to improving the structural compactness of the gearbox 314.

In some embodiments, the engine 31 further includes a cylinder head 312 connected to the engine body 311. The cylinder head 312 faces towards the rear of the off-road vehicle 100. The power output shaft 32 is fitted with an input bevel gear 321 meshed with the output bevel gear 3142a, and the input bevel gear 321 is at least partially arranged in front of the secondary output shaft 3142. The cylinder head 312 extends backward and upward from the engine body 311. The gearbox 314 is at least partially located at the rear of the engine body 311. That is to say, the cylinder head 312 is at least partially located above the gearbox 314. This can avoid the increase in height of the gearbox 314 in the vehicle caused by the input bevel gear 321 being set behind the output secondary shaft 3142, thereby avoiding interference between the engine body 311 and cylinder head 312 and improving the working stability of the engine 31. At the same time, this can also improve the structural compactness of engine 31, which is conducive to improving the space utilization of engine 31 on the off-road vehicle 100.

In some embodiments, as shown in FIGS. 11 and 12, the gearbox 314 further includes a shifting mechanism 3143 and a velocity change mechanism 3144. The velocity change mechanism 3144 is used to control the transmission ratio between the main output shaft 3141 and the secondary output shaft 3142 by the shifting mechanism 3143. That is to say, the shifting mechanism 3143 can control the transmission ratio of the gearbox 314, so that the main output shaft 3141 and the secondary output shaft 3142 can control the gear switching of the off-road 100. The velocity change mechanism 3144 and the shifting mechanism 3143 are both at least partially located behind the main output shaft 3141, while the velocity change mechanism 3144 and the shifting mechanism 3143 are at least partially located above the secondary output shaft 3142. The shifting mechanism 3143 arranged behind the main output shaft 3141 will not affect the height of the gearbox 314 in the upper-lower direction, which can avoid interference between the engine body 311 and the cylinder head 312, thereby improving the structural compactness and working stability of the engine 31. In addition, setting the velocity change mechanism 3144 and the shifting mechanism 3143 above the secondary output shaft 3142 is beneficial for the operation of the shifting mechanism 3143, making it easier for the shifting mechanism 3143 to control the gear switching between the main output shaft 3141 and the secondary output shaft 3142. In some embodiments, the main output shaft 3141 is fitted with a number of first gears with different numbers of teeth, and the secondary output shaft 3142 is fitted with a number of second gears with different numbers of teeth. The first gear and the second gear are meshed with each other, thereby achieving the transmission connection between the main output shaft 3141 and the secondary output shaft 3142. The first gear is fixedly connected to the main output shaft 3141, the second gear is rotationally connected to the secondary output shaft 3142, and a sliding sleeve is provided on the secondary output shaft 3142. The sliding sleeve is arranged between two adjacent second gears, and the sliding sleeve is connected to the secondary output shaft 3142 through spline sliding. The sliding sleeve and the secondary output shaft 3142 rotate synchronously. The velocity change mechanism 3144 is capable of controlling the shifting mechanism 3143 to control the movement of the sliding sleeve on the secondary output shaft 3142, thereby controlling the engagement of the sliding sleeve and different second gears, and achieving synchronous rotation of different second gears and secondary output shaft 3142, in order to control the gear switching between the main output shaft 3141 and the secondary output shaft 3142.

In some embodiments, the velocity change mechanism 3144 is at least partially above the shifting mechanism 3143. All of the axis of the velocity change mechanism 3144, the axis of the shifting mechanism 3143, the axis of the secondary output shaft 3142, and the axis main output shaft 3141 are substantially parallel. The velocity change mechanism 3144, the shifting mechanism 3143, the secondary output shaft 3142, and main output shaft 3141 all extend in the vehicle 100 left-right direction, which is beneficial for the velocity change mechanism 3144 to control the shifting mechanism 3143 and adjust the transmission ratio between the main output shaft 3141 and the secondary output shaft 3142, thereby improving the structural compactness of the gearbox 3144.

In some embodiments, the velocity change mechanism 3144 is a three-axis connected transmission.

## Claims

1. An off-road vehicle (100) comprising
a frame (10);
a plurality of wheels (90) connected to the frame (10), the plurality of wheels (90) comprising at least one front wheel (91,121) and at least one rear wheel (92, 122);
a suspension assembly (20) comprising a front suspension (21) and a rear suspension (22), the front wheel (91, 121) being connected to the frame (10) by the front suspension (21), and the rear wheel (92, 122) being connected to the frame (10) by the rear suspension (22);
a prime mover assembly (30) comprising an engine (31) and a power output shaft (32), the engine (31) being at least partially arranged on the frame (10) and comprising an engine body (311) and a cylinder head (312) connected to the engine body (311), the engine (31) being connected to the power output shaft (32);
a transmission system (40) mounted on the frame (10), the transmission system (40) comprising a front transmission assembly (41) connected to the front wheel (91, 121) and a rear transmission assembly (42) connected to the rear wheel (92, 122);
wherein the front transmission assembly (41) comprises a front rotation shaft (413), and the front transmission assembly (41) rotates around the front rotation shaft (413), the rear transmission assembly (42) comprises a rear rotation shaft (423) and a rear output shaft (422), and the rear transmission assembly (42) rotates around the rear rotation shaft (423), the rear output shaft (422) is connected to the power output shaft (32); **characterized in that**
a longitudinal mid-plane (101) is defined as a plane perpendicular to a width direction of the vehicle and where a center line of the vehicle in a width direction is located, a straight line L1 is defined as a straight line connecting a projection point of the cylinder head mid-point projected on the longitudinal mid-plane (101) of the vehicle in the width direction and a projection point of an axis of the front rotation shaft (413) projected on the longitudinal mid-plane (101) of the vehicle in the width direction, a straight line L2 is defined as a straight line connecting the projection point of the cylinder head mid-point projected on the longitudinal mid-plane (101) of the vehicle in the width direction and a projection point of an axis of the rear rotation shaft (423) projected on the longitudinal mid-plane (101) of the vehicle in the width direction, and a ratio of the length of L1 and the length of L2 is in the range from 0.4 to 1.8.

2. The off-road vehicle (100) of claim 1, wherein the cylinder head (312) extends along a cylinder axis (313) where the cylinder head mid-point is located, an angle α1 is defined between a projection line of the cylinder axis (313) projected on the longitudinal mid-plane (101) in the width direction and the straight line L1, an angle α2 is defined between the projection line of the cylinder axis (313) projected on the longitudinal mid-plane (101) in the width direction and the straight line L2, and a ratio of α1 to α2 is in the range from 0.15 to 0.4.

3. The off-road vehicle (100) of claim 1, wherein the frame (10) comprises two upper main beam tubes (11), two lower main beam tubes (12) and a plurality of longitudinal tubes (13) connecting the upper main beam tubes (11) and the lower main beam tubes (12), with one upper main beam tube (11) and one lower main beam tube (12) arranged at either side of the longitudinal mid-plane (101).

4. The off-road vehicle (100) of claim 3, wherein the plurality of longitudinal tubes (13) comprise a first longitudinal tube (131) arranged in front of a steering assembly (80) and a second longitudinal tube (132) arranged at the rear of the frame (10); the frame (10) further comprises a plurality of reinforcing tubes (14) comprising a first reinforcing tube (141) and a second reinforcing tube (142), the first reinforcing tube (141) is arranged in front of the second reinforcing tube (142), both the first reinforcing tube (141) and the second reinforcing tube (142) are connected to the upper main beam tubes (11) and the lower main beam tubes (12), wherein, a vehicle longitudinal mid-plane projection is defined as a projection of the off-road vehicle (100) projected on the longitudinal mid-plane (101) in the width direction, within the vehicle longitudinal mid-plane projection, a projection of the engine (31) is substantially located within an area enclosed by a projection of the first reinforcing tube (141), a projection of the second reinforcing tube (142), projections of the upper main beam tubes (11), and projections of the lower main beam tubes (12).

5. The off-road vehicle (100) of claim 4, wherein the upper main beam tubes (11) define an upward arched avoidance portion (110).

6. The off-road vehicle (100) of claim 5, wherein two foot pedals symmetric with respective to the longitudinal mid-plane (101).

7. The off-road vehicle (100) of claim 4, wherein the front transmission assembly (41) further comprises a front output shaft (412) connected to the power output shaft (32), all of the axis of the power output shaft (32), the axis of the front output shaft (412), and the axis of the rear output shaft (422) are located on the longitudinal mid-plane (101).

8. The off-road vehicle (100) of claim 4, wherein the distance from the axis of the power output shaft (32) to the ground surface gradually increases from front to rear along the vehicle length direction, and an angle defined between the axis of the power output shaft (32) and a ground surface is in the range from 0 degree to 15 degrees.

9. The off-road vehicle (100) of claim 1, wherein a straight line connecting the projection point of the front rotation shaft (413) and the projection point of the rear rotation shaft (423) is defined as a power output straight line, a point, M is defined as a point where a straight line perpendicular to the ground surface where the projection point of the cylinder head mid-point is located intersects with the power output straight line, a distance from the point M to a front rotation axis is defined as a first distance, and a distance from the point M to a rear rotation axis is defined as a second distance, a ratio of the first distance to the second distance is in the range from 0.9 to 1.5.

10. The off-road vehicle (100) of claim 9, wherein within the vehicle longitudinal mid-plane projection, a distance from the projection point of the cylinder head mid-point to the power output straight line is defined as a third distance, and a ratio of the third distance to the second distance is in the range from 0.4 to 0.78.

11. The off-road vehicle (100) of claim 1, wherein the cylinder head (312) faces towards the rear of the off-road vehicle (100), the engine (31) comprises a gearbox (314) arranged inside the engine body (311), the gearbox (314) comprises a main pulley (316) with first rotation axis (315) and a secondary pulley (218) with a second rotation axis (317), within the vehicle longitudinal mid-plane projection, a first vertical line is defined as a straight line perpendicular to the ground surface and where the projection point of the cylinder head mid-point is located, a distance in a front-rear direction of the off-road vehicle (100) between the first vertical line and the projection point of the first rotation axis (315) is defined as a first length, a distance in a front-rear direction of the off-road vehicle (100) between the first vertical line and the projection point of the second rotation axis (317) is defined as a second length, and a ratio of the first length to the second length is in the range from 4 to 6.

12. The off-road vehicle (100) of claim 11, further comprising an exhaust assembly (50) connected to the engine (31) for exhausting the exhaust gas generated by the engine (31); wherein the exhaust assembly (50) comprises an exhaust pipe (51), the gearbox (314) is arranged at one side of the longitudinal mid-plane (101), and the exhaust pipe (51) is arranged at the other side of the longitudinal mid-plane (101).

13. The off-road vehicle (100) of claim 12, further comprising an intake assembly (60) and a vehicle cover, wherein the air intake assembly (60) is used to intake air to the engine (31), and the vehicle cover at least partially covers the frame (10), the intake assembly (60) comprises an air filter (61) and an intake pipe (62), the intake pipe (62) is connected to the air filter (61) and the engine (31), and the air filter (61) comprises an installation interface (611) that faces towards the outer of the off-road vehicle (100) and is exposed outside the vehicle cover.

14. The off-road vehicle (100) of claim 1, further comprising a first foot pedal (71) and a second foot pedal (72) arranged at either side of the longitudinal mid-plane (101), respectively, within the vehicle longitudinal mid-plane projection, a first vertical line is defined as a straight line perpendicular to the ground surface and where the projection point of the cylinder head mid-point is located, wherein the first vertical line intersects with a projection of the first foot pedal (71) projected on the longitudinal mid-plane (101).

15. The off-road vehicle (100) of claim 14, further comprising a distance in the vehicle length direction from the front edge of the first foot pedal (71) to the first vertical line is defined as a distance D1, a distance in the vehicle length direction from the rear edge of the first foot pedal (71) to the first vertical line is defined as a distance D2, and a ratio of the distance D1 to the distance D2 is in the range from 0.6 to 1.0.

## Patentansprüche

1. Geländefahrzeug (100), umfassend
einen Rahmen (10);
eine Mehrzahl von Rädern (90), die mit dem Rahmen (10) verbunden sind, wobei die Mehrzahl von Rädern (90) mindestens ein Vorderrad (91, 121) und mindestens ein Hinterrad (92, 122) umfasst;
eine Federungsanordnung (20), die eine Vorderradfederung (21) und eine Hinterradfederung (22) umfasst, wobei das Vorderrad (91, 121) über die Vorderradfederung (21) mit dem Rahmen (10) verbunden ist und das Hinterrad (92, 122) über die Hinterradfederung (22) mit dem Rahmen (10) verbunden ist;
eine Antriebsaggregatanordnung (30), die einen Motor (31) und eine Leistungsausgangswelle (32) umfasst, wobei der Motor (31) zumindest teilweise auf dem Rahmen (10) angeordnet ist und einen Motorkörper (311) sowie einen mit dem Motorkörper (311) verbundenen Zylinderkopf (312) umfasst, wobei der Motor (31) mit der Leistungsausgangswelle (32) verbunden ist;
ein auf dem Rahmen (10) montiertes Getriebesystem (40), wobei das Getriebesystem (40) eine vordere Getriebeanordnung (41), die mit dem Vorderrad (91, 121) verbunden ist, und eine hintere Getriebeanordnung (42), die mit dem Hinterrad (92, 122) verbunden ist, umfasst;
wobei die vordere Getriebeanordnung (41) eine vordere Rotationswelle (413) umfasst und die vordere Getriebeanordnung (41) sich um die vordere Rotationswelle (413) dreht, die hintere Getriebeanordnung (42) eine hintere Rotationswelle (423) und eine hintere Ausgangswelle (422) umfasst und sich die hintere Getriebeanordnung (42) um die hintere Rotationswelle (423) dreht, wobei die hintere Ausgangswelle (422) mit der Leistungsausgangswelle (32) verbunden ist;
**dadurch gekennzeichnet, dass**
eine Längsmittellebene (101) ist definiert als eine Ebene, die senkrecht zur Breitenrichtung des Fahrzeugs verläuft und auf der sich eine Mittellinie des Fahrzeugs in Breitenrichtung befindet, eine Gerade L1 ist definiert als eine Gerade, die einen Projektionspunkt des Mittelpunktes des Zylinderkopfs, der auf die Längsmittellebene (101) des Fahrzeugs in Breitenrichtung projiziert ist, mit einem Projektionspunkt einer Achse der vorderen Rotationswelle (413), die auf die Längsmittellebene (101) des Fahrzeugs in Breitenrichtung projiziert ist, verbindet, eine Gerade L2 ist definiert als eine Gerade, die den Projektionspunkt des Mittelpunktes des Zylinderkopfs, der auf die Längsmittellebene (101) des Fahrzeugs in Breitenrichtung projiziert ist, mit einem Projektionspunkt einer Achse der hinteren Rotationswelle (423), die auf die Längsmittellebene (101) des Fahrzeugs in Breitenrichtung projiziert ist, verbindet, und ein Verhältnis der Länge von L1 zu der Länge von L2 liegt im Bereich von 0,4 bis 1,8.

2. Geländefahrzeug (100) nach Anspruch 1, wobei sich der Zylinderkopf (312) entlang einer Zylinderachse (313) erstreckt, an der sich der Mittelpunkt des Zylinderkopfs befindet, ein Winkel α1 als ein Winkel zwischen einer Projektionslinie der Zylinderachse (313), die auf die Längsmittellebene (101) in Breitenrichtung projiziert ist, und der Geraden L1 definiert ist, ein Winkel α2 als ein Winkel zwischen der Projektionslinie der Zylinderachse (313), die auf die Längsmittellebene (101) in Breitenrichtung projiziert ist, und der Geraden L2 definiert ist, und ein Verhältnis von α1 zu α2 im Bereich von 0,15 bis 0,4 liegt.

3. Geländefahrzeug (100) nach Anspruch 1, wobei der Rahmen (10) zwei obere Hauptträgerrohre (11), zwei untere Hauptträgerrohre (12) und eine Vielzahl von Längsrohren (13) umfasst, die die oberen Hauptträgerrohre (11) und die unteren Hauptträgerrohre (12) miteinander verbinden, wobei ein oberes Hauptträgerrohr (11) und ein unteres Hauptträgerrohr (12) jeweils an einer Seite der Längsmittellebene (101) angeordnet sind.

4. Geländefahrzeug (100) nach Anspruch 3, wobei die Vielzahl von Längsrohren (13) ein erstes Längsrohr (131), das vor einer Lenkanordnung (80) angeordnet ist, und ein zweites Längsrohr (132), das am hinteren Ende des Rahmens (10) angeordnet ist, umfasst; wobei der Rahmen (10) ferner eine Vielzahl von Verstärkungsrohren (14) umfasst, die ein erstes Verstärkungsrohr (141) und ein zweites Verstärkungsrohr (142) umfassen, wobei das erste Verstärkungsrohr (141) vor dem zweiten Verstärkungsrohr (142) angeordnet ist, und wobei sowohl das erste als auch das zweite Verstärkungsrohr (141, 142) mit den oberen und unteren Hauptträgerrohren (11, 12) verbunden sind, wobei eine Fahrzeuglängsmittelprojektion als eine Projektion des Geländefahrzeugs (100) auf die Längsmittellebene (101) in Breitenrichtung definiert ist, wobei in der Fahrzeuglängsmittelprojektion eine Projektion des Motors (31) im Wesentlichen innerhalb eines Bereichs liegt, der von einer Projektion des ersten Verstärkungsrohrs (141), einer Projektion des zweiten Verstärkungsrohrs (142), Projektionen der oberen Hauptträgerrohre (11) und Projektionen der unteren Hauptträgerrohre (12) umschlossen ist.

5. Geländefahrzeug (100) nach Anspruch 4, wobei die oberen Hauptträgerrohre (11) einen nach oben gewölbten Ausweichabschnitt (110) definieren.

6. Geländefahrzeug (100) nach Anspruch 5, wobei zwei Trittbretter symmetrisch zur Längsmittellebene (101) ausgerichtet sind.

7. Geländefahrzeug (100) nach Anspruch 4, wobei die vordere Getriebeanordnung (41) ferner eine vordere Ausgangswelle (412) umfasst, die mit der Leistungsausgangswelle (32) verbunden ist, wobei sich die Achsen der Leistungsausgangswelle (32), der vorderen Ausgangswelle (412) und der hinteren Ausgangswelle (422) alle auf der Längsmittellebene (101) befinden.

8. Geländefahrzeug (100) nach Anspruch 4, wobei der Abstand von der Achse der Leistungsausgangswelle (32) zur Bodenoberfläche in Längsrichtung des Fahrzeugs von vorne nach hinten allmählich zunimmt, und ein Winkel, der zwischen der Achse der Leistungsausgangswelle (32) und der Bodenoberfläche definiert ist, im Bereich von 0 Grad bis 15 Grad liegt.

9. Geländefahrzeug (100) nach Anspruch 1, wobei eine Gerade, die den Projektionspunkt der vorderen Rotationswelle (413) mit dem Projektionspunkt der hinteren Rotationswelle (423) verbindet, als Leistungsausgangsgerade definiert ist, ein Punkt M als Schnittpunkt einer Senkrechten zur Bodenoberfläche, an dem sich der Projektionspunkt des Zylinderkopfmittelpunkts befindet, mit der Leistungsausgangsgerade definiert ist, ein Abstand vom Punkt M zur vorderen Rotationsachse als erste Distanz definiert ist, und ein Abstand vom Punkt M zur hinteren Rotationsachse als zweite Distanz definiert ist, wobei ein Verhältnis der ersten zur zweiten Distanz im Bereich von 0,9 bis 1,5 liegt.

10. Geländefahrzeug (100) nach Anspruch 9, wobei innerhalb der Fahrzeuglängsmittelprojektion ein Abstand vom Projektionspunkt des Zylinderkopfmittelpunkts zur Leistungsausgangsgeraden als dritte Distanz definiert ist, und ein Verhältnis der dritten zur zweiten Distanz im Bereich von 0,4 bis 0,78 liegt.

11. Geländefahrzeug (100) nach Anspruch 1, wobei der Zylinderkopf (312) zur Rückseite des Geländefahrzeugs (100) zeigt, wobei der Motor (31) ein Getriebe (314) umfasst, das im Motorkörper (311) angeordnet ist, wobei das Getriebe (314) eine Hauptscheibe (316) mit einer ersten Rotationsachse (315) und eine Nebenscheibe (218) mit einer zweiten Rotationsachse (317) umfasst, wobei innerhalb der Fahrzeuglängsmittelprojektion eine erste Senkrechte als Gerade senkrecht zur Bodenoberfläche definiert ist, an der sich der Projektionspunkt des Zylinderkopfmittelpunkts befindet, wobei ein Abstand in vorderer-hinterer Richtung des Geländefahrzeugs (100) zwischen der ersten Senkrechten und dem Projektionspunkt der ersten Rotationsachse (315) als erste Länge definiert ist, ein Abstand in vorderer-hinterer Richtung des Geländefahrzeugs (100) zwischen der ersten Senkrechten und dem Projektionspunkt der zweiten Rotationsachse (317) als zweite Länge definiert ist, und ein Verhältnis der ersten zur zweiten Länge im Bereich von 4 bis 6 liegt.

12. Geländefahrzeug (100) nach Anspruch 11, ferner umfassend eine Abgasanordnung (50), die mit dem Motor (31) verbunden ist, um Abgase des Motors (31) abzuführen; wobei die Abgasanordnung (50) ein Abgasrohr (51) umfasst, wobei das Getriebe (314) auf einer Seite der Längsmittellebene (101) angeordnet ist und das Abgasrohr (51) auf der anderen Seite der Längsmittellebene (101) angeordnet ist.

13. Geländefahrzeug (100) nach Anspruch 12, ferner umfassend eine Ansauganordnung (60) und eine Fahrzeugabdeckung, wobei die Ansauganordnung (60) dazu dient, Luft in den Motor (31) einzuleiten, und die Fahrzeugabdeckung den Rahmen (10) zumindest teilweise abdeckt, wobei die Ansauganordnung (60) einen Luftfilter (61) und ein Ansaugrohr (62) umfasst, wobei das Ansaugrohr (62) mit dem Luftfilter (61) und dem Motor (31) verbunden ist, und wobei der Luftfilter (61) eine Montageschnittstelle (611) aufweist, die zur Außenseite des Geländefahrzeugs (100) zeigt und außerhalb der Fahrzeugabdeckung freiliegt.

14. Geländefahrzeug (100) nach Anspruch 1, ferner umfassend ein erstes Trittbrett (71) und ein zweites Trittbrett (72), die jeweils auf beiden Seiten der Längsmittellebene (101) angeordnet sind, wobei innerhalb der Fahrzeuglängsmittelprojektion eine erste Senkrechte als Gerade senkrecht zur Bodenoberfläche definiert ist, an der sich der Projektionspunkt des Zylinderkopfmittelpunkts befindet, wobei die erste Senkrechte mit einer Projektion des ersten Trittbretts (71), die auf die Längsmittellebene (101) projiziert ist, schneidet.

15. Geländefahrzeug (100) nach Anspruch 14, wobei ein Abstand in Fahrzeuglängsrichtung vom vorderen Rand des ersten Trittbretts (71) zur ersten Senkrechten als Abstand D1 definiert ist, ein Abstand in Fahrzeuglängsrichtung vom hinteren Rand des ersten Trittbretts (71) zur ersten Senkrechten als Abstand D2 definiert ist, und ein Verhältnis des Abstands D1 zum Abstand D2 im Bereich von 0,6 bis 1,0 liegt.

## Revendications

1. Véhicule tout-terrain (100), comprenant :
un châssis (10) ;
une pluralité de roues (90) connectées au châssis (10), la pluralité de roues (90) comprenant au moins une roue avant (91, 121) et au moins une roue arrière (92, 122) ;
un ensemble de suspension (20) comprenant une suspension avant (21) et une suspension arrière (22), la roue avant (91, 121) étant reliée au châssis (10) par la suspension avant (21), et la roue arrière (92, 122) étant reliée au châssis (10) par la suspension arrière (22) ;
un ensemble moteur (30) comprenant un moteur (31) et un arbre de sortie de puissance (32), le moteur (31) étant au moins partiellement disposé sur le châssis (10) et comprenant un corps de moteur (311) et une culasse (312) reliée au corps de moteur (311), le moteur (31) étant connecté à l'arbre de sortie de puissance (32) ;
un système de transmission (40) monté sur le châssis (10), le système de transmission (40) comprenant un ensemble de transmission avant (41) connecté à la roue avant (91, 121) et un ensemble de transmission arrière (42) connecté à la roue arrière (92, 122) ;
dans lequel l'ensemble de transmission avant (41) comprend un arbre de rotation avant (413), et l'ensemble de transmission avant (41) tourne autour de l'arbre de rotation avant (413), l'ensemble de transmission arrière (42) comprend un arbre de rotation arrière (423) et un arbre de sortie arrière (422), et l'ensemble de transmission arrière (42) tourne autour de l'arbre de rotation arrière (423), l'arbre de sortie arrière (422) étant relié à l'arbre de sortie de puissance (32) ;
**caractérisé en ce que**
un plan longitudinal médian (101) est défini comme un plan perpendiculaire à la direction transversale du véhicule et où se trouve une ligne centrale du véhicule dans la direction transversale, une ligne droite L1 est définie comme une droite reliant un point de projection du point médian de la culasse projeté sur le plan longitudinal médian (101) du véhicule dans la direction transversale et un point de projection d'un axe de l'arbre de rotation avant (413) projeté sur le plan longitudinal médian (101) du véhicule dans la direction transversale, une ligne droite L2 est définie comme une droite reliant le point de projection du point médian de la culasse projeté sur le plan longitudinal médian (101) du véhicule dans la direction transversale et un point de projection d'un axe de l'arbre de rotation arrière (423) projeté sur le plan longitudinal médian (101), et un rapport de la longueur de L1 à la longueur de L2 est compris entre 0,4 et 1,8.

2. Véhicule tout-terrain (100) selon la revendication 1, dans lequel la culasse (312) s'étend le long d'un axe de cylindre (313) où se situe le point médian de la culasse, un angle α1 est défini entre une ligne de projection de l'axe de cylindre (313) projetée sur le plan longitudinal médian (101) dans la direction transversale et la ligne droite L1, un angle α2 est défini entre la ligne de projection de l'axe de cylindre (313) et la ligne droite L2, et un rapport de α1 à α2 est compris entre 0,15 et 0,4.

3. Véhicule tout-terrain (100) selon la revendication 1, dans lequel le châssis (10) comprend deux tubes principaux supérieurs (11), deux tubes principaux inférieurs (12) et une pluralité de tubes longitudinaux (13) reliant les tubes principaux supérieurs (11) et inférieurs (12), un tube principal supérieur (11) et un tube principal inférieur (12) étant disposés de part et d'autre du plan longitudinal médian (101).

4. Véhicule tout-terrain (100) selon la revendication 3, dans lequel la pluralité de tubes longitudinaux (13) comprend un premier tube longitudinal (131) disposé à l'avant d'un ensemble de direction (80) et un second tube longitudinal (132) disposé à l'arrière du châssis (10) ; le châssis (10) comprenant en outre une pluralité de tubes de renfort (14) comprenant un premier tube de renfort (141) et un second tube de renfort (142), le premier tube de renfort (141) étant disposé devant le second tube de renfort (142), les premier et second tubes de renfort (142) étant reliés aux tubes principaux supérieurs (11) et inférieurs (12), une projection médiane longitudinale du véhicule étant définie comme une projection du véhicule tout-terrain (100) sur le plan longitudinal médian (101) dans la direction transversale, dans laquelle la projection du moteur (31) est sensiblement située à l'intérieur d'une zone délimitée par la projection du premier tube de renfort (141), la projection du second tube de renfort (142), les projections des tubes principaux supérieurs (11) et les projections des tubes principaux inférieurs (12).

5. Véhicule tout-terrain (100) selon la revendication 4, dans lequel les tubes principaux supérieurs (11) définissent une portion arquée vers le haut (110).

6. Véhicule tout-terrain (100) selon la revendication 5, comprenant deux repose-pieds disposés de manière symétrique par rapport au plan longitudinal médian (101).

7. Véhicule tout-terrain (100) selon la revendication 4, dans lequel l'ensemble de transmission avant (41) comprend en outre un arbre de sortie avant (412) connecté à l'arbre de sortie de puissance (32), les axes de l'arbre de sortie de puissance (32), de l'arbre de sortie avant (412) et de l'arbre de sortie arrière (422) étant situés sur le plan longitudinal médian (101).

8. Véhicule tout-terrain (100) selon la revendication 4, dans lequel la distance entre l'axe de l'arbre de sortie de puissance (32) et la surface du sol augmente progressivement de l'avant vers l'arrière dans la direction longitudinale du véhicule, et un angle défini entre l'axe de l'arbre de sortie de puissance (32) et la surface du sol est compris entre 0 degré et 15 degrés.

9. Véhicule tout-terrain (100) selon la revendication 1, dans lequel une ligne droite reliant le point de projection de l'arbre de rotation avant (413) et le point de projection de l'arbre de rotation arrière (423) est définie comme une ligne de sortie de puissance, un point M est défini comme le point d'intersection entre une ligne droite perpendiculaire à la surface du sol où se situe le point de projection du point médian de la culasse et la ligne de sortie de puissance, une distance entre le point M et l'axe de rotation avant est définie comme une première distance, et une distance entre le point M et l'axe de rotation arrière est définie comme une seconde distance, un rapport de la première distance à la seconde distance étant compris entre 0,9 et 1,5.

10. Véhicule tout-terrain (100) selon la revendication 9, dans lequel, dans la projection longitudinale médiane du véhicule, une distance entre le point de projection du point médian de la culasse et la ligne de sortie de puissance est définie comme une troisième distance, et un rapport de la troisième distance à la seconde distance est compris entre 0,4 et 0,78.

11. Véhicule tout-terrain (100) selon la revendication 1, dans lequel la culasse (312) est orientée vers l'arrière du véhicule tout-terrain (100), le moteur (31) comprenant une boîte de vitesses (314) disposée à l'intérieur du corps de moteur (311), la boîte de vitesses (314) comprenant une poulie principale (316) avec un premier axe de rotation (315) et une poulie secondaire (218) avec un second axe de rotation (317), dans la projection longitudinale médiane du véhicule, une première ligne verticale est définie comme une ligne droite perpendiculaire à la surface du sol et où se situe le point de projection du point médian de la culasse, une distance dans une direction avant-arrière du véhicule tout-terrain (100) entre la première ligne verticale et le point de projection du premier axe de rotation (315) étant définie comme une première longueur, une distance dans une direction avant-arrière du véhicule tout-terrain (100) entre la première ligne verticale et le point de projection du second axe de rotation (317) étant définie comme une seconde longueur, un rapport de la première à la seconde longueur étant compris entre 4 et 6.

12. Véhicule tout-terrain (100) selon la revendication 11, comprenant en outre un ensemble d'échappement (50) connecté au moteur (31) pour évacuer les gaz d'échappement générés par le moteur (31) ; dans lequel l'ensemble d'échappement (50) comprend un tuyau d'échappement (51), la boîte de vitesses (314) étant disposée d'un côté du plan longitudinal médian (101) et le tuyau d'échappement (51) étant disposé de l'autre côté du plan longitudinal médian (101).

13. Véhicule tout-terrain (100) selon la revendication 12, comprenant en outre un ensemble d'admission (60) et un carénage, dans lequel l'ensemble d'admission d'air (60) est utilisé pour acheminer de l'air vers le moteur (31), et le carénage recouvre au moins partiellement le châssis (10), l'ensemble d'admission (60) comprenant un filtre à air (61) et un tuyau d'admission (62), le tuyau d'admission (62) étant connecté au filtre à air (61) et au moteur (31), le filtre à air (61) comprenant une interface de montage (611) orientée vers l'extérieur du véhicule tout-terrain (100) et exposée à l'extérieur du carénage.

14. Véhicule tout-terrain (100) selon la revendication 1, comprenant en outre une première pédale (71) et une seconde pédale (72) disposées de part et d'autre du plan longitudinal médian (101), dans la projection longitudinale médiane du véhicule, une première ligne verticale est définie comme une ligne droite perpendiculaire à la surface du sol et où se situe le point de projection du point médian de la culasse, ladite première ligne verticale intersectant avec une projection de la première pédale (71) projetée sur le plan longitudinal médian (101).

15. Véhicule tout-terrain (100) selon la revendication 14, dans lequel une distance dans la direction longitudinale du véhicule entre le bord avant de la première pédale (71) et la première ligne verticale est définie comme une distance D1, une distance entre le bord arrière de la première pédale (71) et la première ligne verticale étant définie comme une distance D2, et un rapport de la distance D1 à la distance D2 étant compris entre 0,6 et 1,0.
